# EUROPEAN PATENT APPLICATION

(11) **EP 0 989 103 A1**
(43) Date of publication of application: **29.03.2000**
(21) Application number: 98307761.1
(22) Date of filing: 24.09.1998
(51) Int. Cl.: C03C 25/10, C03C 25/44, C04B 30/02

(54) **Man-made vitreous fibre products for use in thermal insulation, and their production**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The λ value of a thermal insulation product based on an air laid MMVF batt is improved by distribution of graphite substantially homogeneously throughout part or all of the thickness of the batt.

## Description

This invention relates to thermal insulation products based on man-made vitreous fibres (MMVF) and which are modified in a simple manner so as to give improved thermal insulation as indicated by a reduced λ value.

It is known that MMVF products can, depending upon their intended use, be made generally either by wet laying or air laying.

Wet laying is used for products which are to have high structural strength and high density and involves forming a slurry in water of MMVF together with various additives and forming the slurry into the desired shape and removing the water, for instance by moulding or draining the slurry. A wide range of additives are included in such products with the MMVF in order to provide the desired combination of toughness, strength, crack resistance and other physical properties. Such products typically have a density of above 400 and often above 750 kg/m³.

One example of such products is in WO92/09538 which describes a material suitable as insulation in the casting of aluminium and in which the additives include large amounts of lime together with lesser amounts of various other materials including pitch-based graphitic fibre in order to improve mechanical toughness, machinability and high temperature strength and to reduce high temperature cracking. Another example is in US 5,244,722 in which a moulded casting is made by draining an aqueous dispersion of mineral wool containing particulate additives which form incrustations in the resultant moulded product. Additives which are mentioned include clays, colourants, thermoplasts, duroplasts, acids, bases, metals, metallic oxides, silicones, materials containing crystalline water, and carbon. It is mentioned that the use of graphite to produce graphite incrustations is useful to increase slickness and to improve absorption of radiation. In particular, it is stated that the use of carbon black or graphite is useful for the absorption of microwaves or radar waves and that castings made from such materials are useful in areas close to airports to prevent radar interference.

For conventional thermal insulation use, for instance in the walls and roofs of buildings, these dense products are generally unsuitable and, instead, low density, air-laid, MMVF batts are used. These are made by air laying the MMV fibres as a web and converting the web to a batt, for instance by some combination of cross-lapping, compressing and curing bonding agent in the web. Typical thermal insulation materials of this type have densities from 10 to 300 kg/m³.

The thermal conductivity properties depend on a number of factors including the chemical analysis of the fibre, the range of fibre sizes, the degree of oversize particles, and the density of the batt.

There have been various proposals to improve the thermal conductivity or λ value of any particular MMVF batt by including various additives in the batt. For instance, as long ago as 1937 it was proposed in DK 56910 to improve the insulating properties of glass filaments or silicate, mineral or slag filaments in the form of a wool by including a powdered substance which surrounds the filaments and wholly or partially fills the spaces between them. It was proposed to use metal powder, especially aluminium powder, or calcium fluoride for insulation at high temperatures of around 500°C, or carbon, soot, rouge or bentonite for insulation at temperatures of around 100°C. In the subsequent 60 years, such proposals have not proved technically or commercially useful.

It is also known to include graphite fibres blended with organic fibres, or organic fibres containing graphite, in various structures in order to improve the mechanical properties of those structures, (see for instance US 4,833,013). However, this is unrelated to the problem of improving the thermal insulation properties of air laid MMVF thermal insulation.

A thermal insulation product according to the invention comprises a layer which is an air laid MMVF batt or batt stratum, characterised in that graphite is distributed substantially homogeneously throughout the layer.

The product may comprise a batt having graphite distributed substantially homogeneously throughout most or all of the batt, in which event the defined layer substantially has the thickness of the batt. However the products of the invention include those in which the layer is a stratum of the batt, that is to say it is a layer within a batt. For instance the batt stratum, that is to say the layer which contains graphite, may be from 10 to 80%, often 10 or 20% to 50%, of the thickness of the entire batt.

The graphite can be distributed uniformly throughout the layer or there may be a concentration gradient. Irrespective of whether or not there is a concentration gradient, the graphite is distributed substantially homogeneously in the sense that it should be sufficiently uniformly distributed throughout the volume of the batt (or batt stratum) to minimise the risk of significant amounts of radiation being able to pass through the layer without encountering graphite. Accordingly the areas of the layer which are substantially free of graphite should be as low as possible.

It is possible, by the invention, to obtain a significant improvement (reduction) in λ as a result of including the graphite. This is in distinct contrast to, for instance, the bentonite, rouge, carbon or soot proposed in DK 56910. For instance it is easy, by the invention, to reduce the λ value of a batt by at least 0.5 units (eg from 35.5 mW/mK down to 35.0) and generally by at least 0.8 or 1 unit, eg 1 to 3 units or more.

As a result of the improved insulation properties, the invention can result in providing improved insulation with the same weight or type of MMVF, or insulation which gives equivalent insulation value at lower thickness, or it can result in the use of a lower weight of insulation but giving equivalent insulation behaviour to conventional heavier products. This is of particular value for use in areas such as aeroplanes and other vehicles because of the ability to reduce weight and thus reduce fuel requirements for the vehicle.

Another advantage of the invention is that the graphite is chemically and mechanically stable and thus maintains its performance properties throughout the entire life of the insulation product.

Another advantage is that it is much less combustible than other additives which have been proposed, including other carbon based additives, and this makes the products of particular value for high temperature (eg above 300°C) insulation use, eg at 500 to 800°C. However the product is also useful for improving insulation properties at low temperatures, for instance down to -20°C. The ability of the graphite to give improved insulation across the entire range of -20 to 800°C is particularly surprising.

The graphite is preferably polycrystalline graphite.

The graphite can be included in the layer in any physical form which gives the desired improvement. It is usually preferred for the graphite to be in the form of particles rather than fibres, in particular particles having an average particle size of not more than 100 µm. Preferably the average particle size is not more than 20 µm and best results are achieved when it is not more than about 5 or 10 µm.

The average particle size is usually at least 0.01 µm and generally at least 0.1 or 0.5 µm. Best results are generally obtained when the average particle size is between about 0.5 and 10 µm, preferably about 1 to 3 or 4 µm.

Average particle sizes mentioned herein are determined using laser scattering techniques (eg Malvern). This determines all dimensions of the particles and gives particle size as an average of these.

It is generally preferred that at least 75% by weight, and preferably at least 90% by weight, of the graphite particles have an actual size which complies with the numerical values quoted above for the average sizes.

The graphite particles are generally platelets or lamellae. The surface area of the graphite is generally above 0.1 m²/g, and usually above 0.5 m²/g. Preferably it is from 0.8 m²/g to 3 m²/g, but it can be higher.

The amount of graphite in the layer usually needs to be at least about 0.2% by weight of the layer in order to give a useful increase in performance, and is generally at least around 0.4 or 0.5% by weight. Preferably it is at least 1% by weight. Further improvement in insulation is generally achieved by using higher amounts for instance up to 4% or 7% by weight. Increasing the amount above about 10% does not give any significant further improvement in insulation and can impair other properties. The preferred amounts are around 0.5 to 7%, preferably 1 to 4% by weight of the layer.

The graphite may be held in the layer merely by physical interaction between the graphite and the MMV fibres of which the batt is formed. Generally, however, it is preferred to bond the graphite into the batt using a binder. The binder can be included primarily for the purpose of bonding the graphite into the batt, but generally the batt is itself a bonded batt in which event part or all of the binder for the batt can conveniently also serve as binder for the graphite.

The binder for the graphite can be inorganic such as sodium or potassium or lithium silicate, silicophosphate, monoaluminium or silica sol. Suitable amounts are 0.1 to 10%, generally 1 to 5 or 1 to 7% by weight binder solids based on the dry weight of the batt. The binder is applied as an aqueous solution and the graphite can be included as a suspension in this solution.

Often the binder for the graphite is organic and can be any of the conventional curable binders which are known for MMVF batts. Suitable binders include curable binders based on phenol, urea, resorcinol, furan or melamine, and in particular resins formed by reacting the above with formaldehyde. Curable acrylic PVAC's, polyamides, polyimides, polyamides/-imides, polyesters etc, may be used. Other organic binders which can be used with or without the curable binders for instance to promote the bonding of the graphite, include acrylics, modified starches, chitosan, dopa, tannin, xanthan or other gums, cellulose derivatives, alginates, polyvinyl acetate and thermoplastics. The amount of organic binder is usually not more than 10% and generally not more than 7%, with preferred amounts being below 5%. These percentages are by weight binder solids based on the dry weight of the batt. Inorganic and organic binders may also be used in combination. The graphite can be included as a suspension in the aqueous binder.

The dry weight of the organic binder in the final batt is below 10%, usually below 4 or 5% and preferably below 3% by weight. Mixtures of organic and inorganic binders can be used.

The MMV fibres can be any man-made vitreous fibres which are suitable for the production of low density thermal insulation. Accordingly the fibres can be glass, rock, stone or slag fibres. The fibres can have any suitable dimensions, for instance those which are conventional in the production of low density and thermal insulation products. Generally the average fibre diameter is below 10 µm, eg below 5 µm, and can be the same as conventional fibre diameter.

The batt generally consists substantially only of MMV fibres, graphite and minor additives such as binder and oil. The batt is usually free of combustible or organic fibres.

The batt, and the layer which consists of part or all of the thickness of the batt, must be low density, and in practice usually have a density of below 300 kg/m³ and preferably below 150, and most preferably below 120 kg/m³. The density is usually at least 7, and preferably at least 10, more preferably at least 50 kg/m³.

The thermal insulation product may consist solely of the batt. Thus it can consist of either the batt containing graphite distributed throughout its thickness or a batt stratum which contains graphite and which is integral with the remainder of a batt which is otherwise free of graphite. However if desired the product can comprise other materials, for instance one or more other air laid MMVF batts and/or decorative or structural materials such as foil.

The product can be shaped in conventional shapes, for instance for use as insulation for pipes or for boiler installations or for general building insulation. Accordingly, the product can have shapes such as cylindrical, part cylindrical or substantially rectangular slabs and rolls.

The batt can be made in conventional manner, for instance by forming a cloud of man-made vitreous fibres entrained in air by fiberising mineral melt into an air stream and air-laying the fibres on to a collector as a web, and converting the web to a batt in conventional manner. This conversion can involve, for instance, cross-lamination of the web and curing of any binder that is present.

In the invention, graphite can be distributed through some or all of the thickness of the eventual batt by including graphite in part or all of the cloud of fibres. Depending upon how the graphite is distributed within the cloud, it will then be uniformly distributed throughout the web or will be distributed through part only of the web. It is then possible, in conventional manner, to form a batt which either has graphite distributed throughout its thickness or through part only of its thickness.

The graphite can be included in the cloud of fibres either by injecting the graphite into the cloud from around the cloud, or by injecting the graphite into the cloud during the formation of the fibres. For instance the mineral melt is generally fiberised using a centrifugal fiberising apparatus such as a disk or cup which rotates about a substantially vertical axis or a cylinder (usually a cascade of cylinders) or disk which rotates about a substantially horizontal axis. This forms initially an annular cloud of fibres, and the graphite can be injected into the centre of this annular cloud from the centrifugal fiberising apparatus.

Preferred apparatus and methods are described in our International Patent Publications WO97/20779 and WO97/20781. Graphite in a liquid carrier may be supplied via a centrifugal distribution means which is attached to and rotates coaxially with one or more of the cylinders (especially for particles of size 1 to 2 µm) or via spray nozzles placed inside or outside the annular cloud.

Another way of making the products of the invention is by collecting the web of fibres (without prior addition of graphite) and then impregnating the graphite into the web, for instance on the collector, and then converting the web to the batt.

Another way of making the products is by forming a batt in conventional manner, for instance as described above, and then impregnating part or all of the thickness of the batt with graphite.

In all these techniques, the graphite may be added as powder or as a slurry in water or as a slurry in aqueous binder. The aqueous binder may be the binder for the batt or a separate aqueous binder solution.

Typical products of the invention made from rock, stone or slag wool by centrifugal fiberising apparatus (such as a cascade spinner) comprise 60 to 75 wt% fine mineral fibre, 2 to 4 wt% binder and 23 to 36 wt% shots (for instance having an average size above 63 µm).

The following are examples.

### Example 1

225 ml of a 25% aqueous, phenolic, curable binder is mixed with 200 ml tap water followed by 5 ml binder which is a sodium salt of maleic acid-olefin copolymer (available from BASF under the tradename Sokalan CP9). 150 g graphite having a mean particle size of 2.8 µm and a surface area of 1.2 m²/g is slowly added while stirring. The rate of stirring is increased until a homogeneous dispersion is formed. This dispersion is stable for several days.

A mineral melt is fiberised using a cascade spinner of conventional type having at least three substantially cylindrical rotors mounted for rotation about a horizontal axis, whereby melt poured onto the top rotor is thrown from one rotor to the next in series and is fiberised. An airstream flows from the rotors in conventional manner to carry the fibres as a cloud towards a permeable inclined collector, where the fibres are collected as a web in conventional manner.

The aqueous binder and graphite slurry is injected into the cloud as it is formed using the conventional binder supply tubes on the fibre forming apparatus.

The web is then cross-lapped to form an uncured batt. This is then passed through an oven to cause curing.

### Example 2

In this Example, the graphite and binder are not mixed into the aqueous phenolic binder. Instead, the graphite is dispersed in an aqueous solution of the binder and this is then injected through sprays into the cloud of fibres separately from the phenolic binder.

### Example 3

Three products are made using the same melt and fiberising conditions, broadly as described in Example 1. In each instance the web is cross-lapped and the product is then cured to form the desired batt.

In reference 1, the phenolic binder is used, but without any addition of graphite.

In test 1, the binder and graphite are added as shown in Example 1 to give 2 wt% graphite in the batt. In test 2, the amount of graphite is 4 wt% (and the average density of the batt happened to be slightly lower).

The thermal conductivities of each of the products, λ was measured at 10°C in accordance with the ISO 8301 norm. The results are shown in the following table.

| Sample | No. of samples | ρ [kg/m³] | λ measured [mW/mK] |
|---|---|---|---|
| Ref. 1 | 4 | 28.7 | 36.21 |
| Test 1 | 15 | 28.7 | 34.93 |
| Test 2 | 8 | 26.2 | 34.85 |

It is apparent that the inclusion of graphite significantly reduces λ.

## Claims

1. A thermal insulation product comprising a layer which is an air laid MMVF batt or batt stratum characterised in that graphite is distributed substantially homogeneously throughout the layer.

2. A product according to claim 1 in which the graphite is distributed through the layer as particles.

3. A product according to claim 2 in which the graphite particles have an average particle size of 0.2 to 10 µm, preferably 1 to 3 µm.

4. A product according to claim 2 or claim 3 in which the graphite particles are held in the layer by being bonded to the surfaces of the MMV fibres by a binder.

5. A product according to claim 4 in which the batt is bonded by a binder and the graphite particles are held in the layer by this binder.

6. A product according to any preceding claim in which the amount of graphite is 0.2 to 10%, preferably 1 to 7%, by weight of the layer.

7. A product according to any preceding claim in which the layer has a density of 7 to 300, preferably 10 to 150, kg/m³.

8. Use of a product according to any preceding claim as thermal insulation at a temperature of -20 to 800°C.

9. Use according to claim 8 for providing insulation at a temperature of above 300°C.

10. A process of making a product according to any of claims 1 to 7 comprising forming a cloud of man-made vitreous fibres entrained in air by fiberising mineral melt into an air stream, including graphite in part or all of the cloud of fibres, air-laying the fibres and graphite on a collector as a web, and converting the web to a batt.

11. A process according to claim 10 in which the graphite is included in the cloud as a dispersion of graphite in aqueous binder for the batt.

12. A process according to claim 11 in which the graphite is included in the cloud as a dispersion of graphite in aqueus binder separate from the binder for the batt; as a powder; or as a slurry in water.

13. A process of making a product according to any of claims 1 to 7 comprising forming a cloud of man-made vitreous fibres entrained in air by fiberising mineral melt into an air stream, collecting the fibres on a collector as a web, impregnating part or all of the web with graphite, and converting the web to the batt.

14. A process of making a product according to any of claims 1 to 7 comprising impregnating an air laid MMVF batt with graphite through part or all of its thickness.
